# EUROPÄISCHE PATENTSCHRIFT

(11) **EP 1 047 853 B1**
(45) Veröffentlichungstag und Bekanntmachung des Hinweises auf die Patenterteilung: **28.06.2006**
(21) Anmeldenummer: 99904760.8
(22) Anmeldetag: 11.01.1999
(51) Int. Cl.: E05B 49/00, B60R 25/04

(54) **VERFAHREN ZUM BETRIEB EINES FAHRZEUGS UND VORRICHTUNG ZUR DURCHFÜHRUNG DES VERFAHRENS**
METHOD FOR OPERATING A VEHICLE, AND A DEVICE FOR CARRYING OUT SAID METHOD
PROCEDE DE FONCTIONNEMENT D'UN VEHICULE ET DISPOSITIF POUR METTRE EN OEUVRE LEDIT PROCEDE

(30) Priorität: 14.01.1998 DE 19801064; 27.05.1998 DE 19823707
(43) Veröffentlichungstag der Anmeldung: 02.11.2000
(73) Patentinhaber: Bayerische Motoren Werke Aktiengesellschaft, 80788 München (DE)
(72) Erfinder: KOBLBAUER, Michael, D-84032 Altdorf (DE)
(86) Internationale Anmeldenummer: PCT/EP1999/000103
(87) Internationale Veröffentlichungsnummer: WO 1999/036651

(56) Entgegenhaltungen:
- DE-A- 3 206 434
- DE-A- 4 409 559
- DE-A- 4 435 894

## Beschreibung

Die Erfindung bezieht sich auf ein Verfahren zum Betrieb eines Fahrzeugs.

Das erfindungsgemäße Verfahren geht aus von einem Verfahren mit den Merkmalen des Oberbegriffs von Patentanspruch 1.

Ein derartiges Verfahren ist aus der DE 36 15 890 A bekannt. Dabei wird der Dialog zwischen dem Steuergerät und der BNE drahtlos durchgeführt. Die BNE ist beispielsweise ein Transponder, der ein vom Steuergerät ausgesandtes Fragesignal aufnimmt und ein Antwortsignal mit einem Antwort-Code ausgibt. Handelt es sich um den berechtigten Benutzer, so erkennt das Steuergerät aufgrund des richtigen Antwort-Codes diesen und ermöglicht bzw. realisiert die Entriegelung der Fahrzeugtüren. Bei dem bekannten Verfahren ist es dann ohne weiteres möglich, die Fahrzeugantriebseinheit in Betrieb zu nehmen. Ein hierfür vorgesehener Drehknopf ist mit dem Lenkradschloß vereinigt und kann ohne weiteres betätigt werden. Dabei ergibt sich das Problem, daß es für die Inbetriebnahme der Fahrzeugantriebseinheit genügt, das Fahrzeug zu entriegeln. Die Inbetriebnahme der Fahrzeugantriebseinheit ist dann auch durch einen Fahrgast möglich, wenn der die BNE tragende berechtigte Fahrzeugbenutzer dies nicht wünscht.

Das geschilderte Problem wird besonders dann besonders gravierend, wenn die Zugangsberechtigung in einer Form abgefragt wird, wie sie aus der DE 195 16 316 A bekannt ist. Dort wird der Frage-Antwort-Dialog bereits durchgeführt, wenn sich der berechtigte Benutzer mit seiner Hand dem Türgriff nähert. Tut er dies beispielsweise nicht in der Absicht, auch die Fahrzeugtür zu öffnen, und erkennt er nicht, daß trotzdem der Dialog zu seiner Identifizierung geführt hat und das Fahrzeug entriegelt ist, so ist es dann auch für einen Dritten ohne Kenntnis des berechtigten Benutzers möglich, in das Fahrzeug zu gelangen und die Antriebseinheit in Betrieb zu nehmen.

Neben dem bekannten Verfahren ist es auch zukünftig möglich, die Zugangsberechtigung durch körpereigene individuelle Merkmale nachzuweisen. Bekannt ist beispielsweise die Identifizierung mit Hilfe eines Fingerabdrucks oder einer Spracherkennung. Auch im Falle einer derartigen physiologischen Berechtigungsnachweiseinrichtung ergibt sich bei der aus der DE 36 15 890 A bekannten quasi automatischen Freischaltung der Fahrzeugantriebseinheit das Problem der unerwünschten bzw. unberechtigten Inbetriebnahme dieser Einheit.

Die DE-A-44 35 894, DE-A-32 06 434 und DE-A-44 09 559 beschreiben Verfahren zum Betrieb eines Fahrzeugs, bei dem eine Zugangsberechtigung im Dialog zwischen einem fahrzeugfesten Steuergerät und einer vom Benutzer getragenen Berechtigungsnachweiseinrichtung BNE ermittelt wird. Die BNE wird außerdem dazu verwendet, die Inbetriebnahme der Fahrzeugsantriebseinheit zu ermöglichen, wobei die BNE hierbei unabhängig vom Feststellen der Zugangsberechtigung abgefragt und hierdurch zur Ausgabe eines Zugangsberechtigungscodes aus einem Speicher veranlasst wird. Die DE-A-44 35 894 befasst sich mit Einzelheiten zur Freigabe des Lenkradschlosses und die DE-A-44 09 559 sieht eine teilbare BNE vor, deren Teile unterschiedliche Öffnungsvorgänge bewirken.

Der Erfindung liegt die Aufgabe zugrunde, ein Verfahren der eingangs genannten Art zu schaffen, bei dem eine unerwünschte bzw. unberechtigte Inbetriebnahme der Fahrzeugantriebseinheit verhindert wird.

Die Erfindung löst diese Aufgabe durch die Merkmale des Patentanspruchs 1.

Da die Berechtigung zur Inbetriebnahme der Fahrzeugantriebseinheit nun nicht mehr an einen mechanischen Zündschlüssel gekoppelt ist, ergibt sich insbesondere dann, wenn ein elektronischer Speicher für den Zugangsberechtigungsnachweis vorgesehen ist, das Problem des Verlustes des Speichers während des Betriebs der Fahrzeugantriebseinheit. Dieser Verlust kann unbemerkt vom berechtigten Benutzer erfolgen, beispielsweise indem der Speicher unbemerkt aus dem Fahrzeug entfernt wird.

Dasselbe Problem tritt auf, wenn der Speicher seine Fähigkeit verliert, den Zugangsberechtigungs-Code zu übermitteln. Beispielsweise im Falle eines elektrischen Defekts der BNE, der während des Betriebs der Fahrzeugantriebseinheit auftritt, ist die BNE unwirksam und ermöglicht nicht mehr die nachträgliche Inbetriebnahme der Fahrzeugantriebseinheit. Dieser Fall tritt beispielsweise auf, wenn die Antriebseinheit als Brennkraftmaschine ausgebildet ist und diese vor einem geschlossenen Bahnübergang kurzzeitig abgestellt werden muß. Da zur Inbetriebnahme der Fahrzeugantriebseinheit der Zugangs-Code übermittelt werden muß, ergibt sich daraus ein erhebliches Problem für den Fahrzeugbenutzer. Um dieses Problem zu vermeiden, kann die Abfrage des Zugangs-Codes auch während und/oder nach Abschluß des Betriebs der Fahrzeugantriebseinheit vorgenommen werden. Die Abfrage während des Betriebs läßt es zu, den Verlust schnell zu erkennen. Voraussetzung dafür ist lediglich eine entsprechende Häufigkeit dieser Abfrage.

Die Abfrage nach Abschluß des Betriebs ermöglicht es wenigstens, geeignete Maßnahmen zu ergreifen, um das Fahrzeug anschließend wieder in Betrieb nehmen zu können. Ergebnis der Abfrage des Zugangs-Codes während oder nach Abschluß des Betriebs der Fahrzeugantriebseinheit kann die Abgabe eines Warnsignals sein. Demgegenüber ist es vorteilhaft, in diesem Fall einen fahrzeugfesten Speicher für den Zugangs-Code vorzusehen, der dann entriegelt wird und vom Benutzer beispielsweise auch aus dem Fahrzeug entfernt werden kann.

Dieser Speicher ist zusätzlich zu dem eigentlichen Speicher für den Zugangs-Code vorgesehen. Dieser redundante Speicher ist dann wirksam. Er kann als mechanisches Teil ausgebildet sein, das in die Berechtigungsnachweiseinrichtung eingesetzt wird und den dort vorgesehenen, ggf. defekten Speicher für den Zugangs-Code funktionell ersetzt. Der Speicher kann dann wiederum allein oder zusammen mit der BNE in ein Betätigungsteil für die Inbetriebnahme bzw. den Betrieb der Fahrzeugantriebseinheit eingesetzt werden. Er kann auch mit einem mechanischen Schlüssel verbunden sein, der in einem Zündschloß dann eingesetzt wird und die Inbetriebnahme der Fahrzeugantriebseinheit in der üblichen konventionellen Weise ermöglicht.

Um für den Fahrzeugnutzer erkennbar zu machen, daß der redundante Speicher wirksam (geworden) ist, kann der Fahrzeugbenutzer augenfällig auf die erfolgte Entriegelung des fahrzeugfesten Speichers hingewiesen werden. Damit wird die Gefahr eines versehentlichen Zurücklassens des redundanten Speichers im Fahrzeug und die damit verbundene Möglichkeit für den unberechtigten Benutzer, das Fahrzeug in Betrieb zu setzen, deutlich herabgesetzt.

Erfolgt dabei ein Auswurf des Speichers aus seiner Aufnahme, wird der Fahrzeugnutzer nicht nur deutlich auf die besondere Situation hinweisen, sondern auch veranlaßt, dem Verriegelungsvorgang des Fahrzeugs besondere Aufmerksamkeit zu schenken und die Verriegelung ggf. in konventioneller Weise, z.B. mittels eines in der Regel zusätzlich vorhandenen mechanischen Schlüssels vorzunehmen.

Damit ist die Gefahr beseitigt, im Notfall durch die dafür vorgesehenen Maßnahmen einen Unberechtigten in die Lage zu versetzen, das Fahrzeug zu benutzen. Der berechtigte Nutzer wird veranlaßt, die notwendigen Maßnahmen (z.B. Entfernen des redundanten Speichers) selbst vorzunehmen.

Anhand der Zeichnung ist die Erfindung weiter erläutert. Es zeigt
- Fig. 1: eine Betätigungseinheit für eine Fahrzeugsantriebseinheit von vorne
- Fig. 2: eine zugehörige Berechtigungsnachweiseinrichtung in der Draufsicht und
- Fig. 3: die Berechtigungsnachweiseinrichtung von Fig. 2 ebenfalls in der Draufsicht und ergänzt durch eine Baueinheit, die im Notfall die Inbetriebnahme der Fahrzeugantriebseinheit ermöglicht.

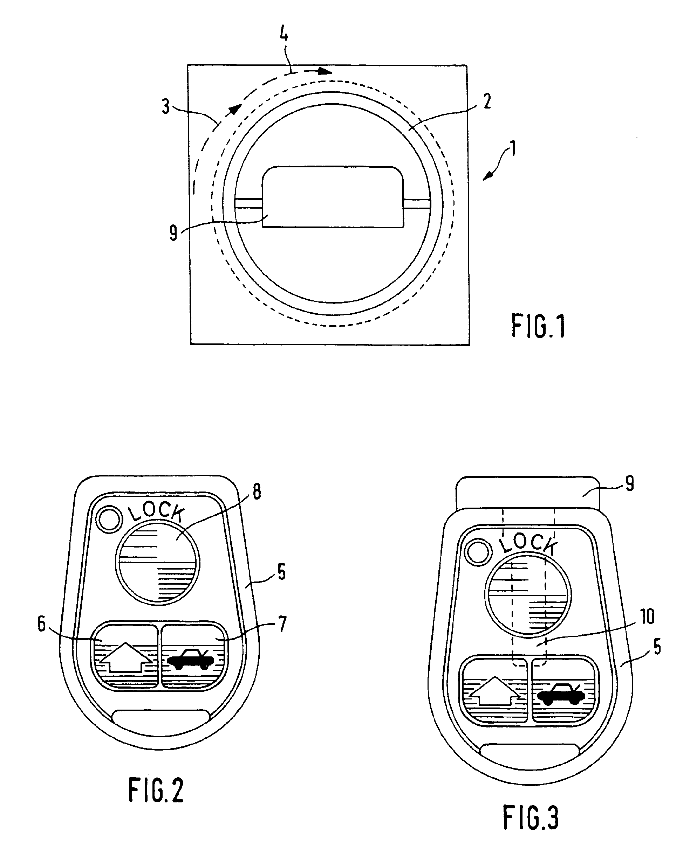

Fig. 1 zeigt eine Betätigungseinheit 1 für eine nicht dargestellte Fahrzeugantriebseinheit, mit deren Hilfe es möglich ist, die Antriebseinheit in Betrieb zu nehmen. Hierzu wird ein drehbares Teil 2 der Einheit 1 in Richtung der durch Pfeile 3 vorgegebenen Richtung gedreht. Die hintereinander angeordneten Pfeile 3 und 4 bedeuten die Aufeinanderfolge zweier Drehbewegungen, durch die bei der ersten Drehbewegung zunächst in üblicher Weise der Zündstromkreis (nicht dargestellt) des Fahrzeugs geschlossen wird und durch Weiterdrehen (Pfeil 4) der Anlasserstromkreis ebenfalls geschlossen wird und ein ebenfalls nicht dargestellter Anlasser in Betrieb genommen wird. Damit läßt sich die Antriebseinheit, hier als Brennkraftmaschine angenommen, starten.

Wesentlich dabei ist, daß das Starten im Normalfall, d. h. bei ordnungsgemäßer Funktion der vorhandenen Komponenten, ohne das Einführen eines konventionellen Zündschlüssels in die Betätigungseinheit 1 erfolgt.

Um die Berechtigung zur Inbetriebnahme der Antriebseinheit zu prüfen, ist eine Berechtigungsnachweiseinrichtung 5 vorgesehen, die einen Speicher (nicht dargestellt) für einen Zugangsberechtigungs-Code enthält und die ferner in üblicher Weise als Fernbedienungssignalgeber ausgebildet ist. Sie besitzt Drucktasten 6 und 7 zur Fernentriegelung der Zentralverriegelungsanlage (6) bzw. des Kofferraums (7) sowie zusätzlich eine Drucktaste 8 zur Ausgabe eines Fernbedienungssignals für die Verriegelung der Türen und Klappen des Fahrzeugs. Der Speicher für den Zugangsberechtigungs-Code wird bei Betätigung der Drucktaste 6 bzw. 7 ausgelesen und sendet den Zugangsberechtigungs-Code in bekannter Weise aus, der sich ebenfalls in bekannter Weise mit jeder Betätigung entsprechend einem vorgegeben Algorithmus ändert und dadurch die Abhörsicherheit gewährleistet. Der Code wird von einem im Fahrzeug vorgesehenen Steuergerät aufgenommen. Entspricht er dem erwarteten Code, so wird der entsprechende Fernbedienungsbefehl realisiert.

Ebenfalls vorgesehen ist die Möglichkeit, ohne die Ausgabe eines Fernbedienungssignals ein zuvor verschlossenes Fahrzeug öffnen zu können. Hierzu wird, wie an sich aus der DE 35 36 377 A bekannt, ein Dialog zwischen dem Steuergerät und der Einrichtung 5 bei Betätigen einer Türhandhabe ausgelöst und, sofern von der Einrichtung 5 der erwartete Code ausgegeben wird, die Verriegelung des Fahrzeugs aufgehoben und der Zugang ermöglicht.

Zur Inbetriebnahme der Antriebseinheit wird mit dem Drehen des Teils 2 in Richtung der Pfeile 3 und 4 ebenfalls ein Fragesignal ausgesandt, das von der Einrichtung 5 aufgenommen wird und wie zuvor im Falle des Frage-Antwort-Dialogs für den Zugang beschrieben, durch Ausgabe des Zugangsberechtigungs-Codes beantwortet.

Das Steuergerät empfängt diesen Code und gibt, sofern er dem erwarteten Code entspricht, den Zündstrom- bzw. Anlasserstromkreis frei.

Damit ist es möglich, ohne Verwendung eines konventionellen mechanischen Zündschlüssels das Fahrzeug zu starten. Andererseits wird durch die Abfrage des Zugangsberechtigungs-Codes vor der Inbetriebnahme der Antriebseinheit sichergestellt, daß sich die Einheit 5 innerhalb des Fahrzeugs befindet. Damit ist sichergestellt, daß der Benutzer, der sich berechtigterweise Zugang zum Fahrzeug verschafft hat, nunmehr mit hoher Wahrscheinlichkeit innerhalb des Fahrzeugs sitzt. D. h. die Inbetriebnahme der Fahrzeugantriebseinheit geschieht mit hoher Wahrscheinlichkeit durch ihn oder zumindest in dessen Einverständnis.

Für den Fall, daß die Einheit 5 nach der Inbetriebnahme der Antriebseinheit aus dem Fahrzeug entfernt wird bzw. ihre Funktionsfähigkeit verliert, ist eine weitere Maßnahme vorgesehen. Diese besteht zunächst darin, den Berechtigungs-Code zu definierten Zeitpunkten abzufragen. Dies kann dann sein, wenn die Antriebseinheit abgestellt wird. Es kann aber auch sein, wenn die Antriebseinheit ohne vorheriges Öffnen und Schließen einer Fahrzeugtür erneut in Betrieb genommen wird bzw. auch in regelmäßigen zeitlichen Abständen während des Betriebs der Antriebseinheit. Hierzu wird stets der Zugangsberechtigungs-Code durch das Steuergerät abgefragt und, sofern die Einheit 5 innerhalb des Fahrzeugs sitzt und funktionstüchtig ist, durch Ausgabe des Zugangsberechtigungs-Codes der Nachweis der Berechtigung und der Funktionsfähigkeit der Einheit 5 erbracht.

In den angenommenen Fehlerfällen wird auf die Anfrage nun nicht mehr der Zugangsberechtigungs-Code ausgegeben. Um auch dann noch die ordnungsgemäße Funktion des Fahrzeugs sicherzustellen und auch die erneute Inbetriebnahme der Antriebseinheit zu ermöglichen, ist innerhalb der Einrichtung 1 ein zusätzlicher Speicher 9 vorgesehen, der ebenfalls den Zugangsberechtigungs-Code enthält und der innerhalb der Einrichtung 1 arretiert ist. Tritt der beschriebene Notfall auf, so wird die Arretierung (nicht dargestellt) aufgehoben. Der Speicher 9 ist damit aus der Einrichtung 1 entnehmbar.

Der Speicher 9 bildet eine Baueinheit mit einem mechanischen Schlüssel 10, der in die Einheit 5 einsteckbar ist. Dies ist in Fig. 3 gezeigt. In diesem Fall tritt der Speicher 9 an die Stelle des in der Einheit 5 vorgesehenen Speichers. Er liefert den Zugangsberechtigungs-Code, der aus der Einheit 5, sei es bei Betätigen der Tasten 6 bzw. 7 oder auf das Fragesignal des Steuergeräts hin, ausgegeben wird.

Ist der in der Einheit 5 vorgesehene Energiespeicher (nicht dargestellt) leer, so kann ein Fernbedienungssignal nicht ausgegeben werden. Damit ist lediglich eine mechanische Entriegelung einer Fahrzeugtür möglich. Dies geschieht, indem der Schlüssel 10 in eine entsprechende Aufnahme eines Türschlosses des Fahrzeugs eingeschoben wird.

Ebenso möglich ist es in diesem Fall, die Antriebseinheit in Betrieb zu nehmen. Hierzu wird die aus den Teilen 9 und 10 bestehende Einheit in die Einrichtung 5 eingesteckt. Der Schlüssel 10 dient dann wie ein konventioneller Zündschlüssel dazu, die Inbetriebnahme der Antriebseinheit durch Drehen des drehbaren Teils 2 zu ermöglichen. Damit ist das Öffnen bzw. das Inbetriebnehmen des Fahrzeugs in konventioneller Weise jederzeit möglich.

## Patentansprüche

1. Verfahren zum Betrieb eines Fahrzeugs, bei dem eine Zugangsberechtigung im Dialog zwischen einem fahrzeugfesten Steuergerät und einer vom Benutzer getragenen Berechtigungsnachweiseinrichtung (5), i.f. "BNE" genannt, ermittelt wird und die BNE auch dazu verwendet wird, die Inbetriebnahme der Fahrzeugantriebseinheit zu ermöglichen, bei dem die BNE zur Inbetriebnahme der Fahrzeugantriebseinheit unabhängig vom Feststellen der Zugangsberechtigung bei der Inbetriebnahme der Fahrzeugantriebseinheit abgefragt wird und aus einem Speicher einen Zugangsberechtigungscode ausgibt, **dadurch gekennzeichnet, dass** die Abfrage auch während und/oder nach Abschluss des Betriebs der Fahrzeugantriebseinheit vorgenommen wird, um einen Verlust des Speichers während des Betriebs der Fahrzeugantriebseinheit oder einen Verlust der Fähigkeit des Speichers, den Zugangsberechtigungs-Code zu übermitteln, erkennbar zu machen.

2. Verfahren nach Anspruch 1, **dadurch gekennzeichnet, dass** dann, wenn nach Inbetriebnahme der Fahrzeugantriebseinheit die Abfrage erfolglos ist, ein redundanter Speicher (9), der ebenfalls den Zugangsberechtigungs-Code enthält, mechanisch entriegelt wird.

3. Verfahren nach Anspruch 2, **dadurch gekennzeichnet, dass** der Fahrzeugbenutzer augenfällig auf die erfolgte Entriegelung des redundanten Speichers (9) hingewiesen wird.

4. Verfahren nach Anspruch 3, **dadurch gekennzeichnet, dass** der redundante Speicher (9) bei Abstellen der Fahrzeugantriebseinheit ausgeworfen wird.

5. Verfahren nach einem der Ansprüche 2 bis 4, **dadurch gekennzeichnet, dass** der redundante Speicher (9) in die BNE (5) und diese wiederum in eine Betätigungseinrichtung (1) eingesteckt wird.

6. Verfahren nach Anspruch 5, **dadurch gekennzeichnet, dass** der redundante Speicher (9) und ein mechanischer Schlüssel (10) eine Baueinheit bilden, die in die Betätigungseinheit (1) eingesteckt wird.

## Claims

1. A method for operating a vehicle, in which the access authorisation is determined in the dialogue between a control apparatus fixed to the vehicle and an authorisation verification device (5), hereinafter called "AVD", carried by the user, and the AVD is also used for the purpose of enabling the vehicle drive unit to be started up, wherein the AVD is interrogated to start up the vehicle drive unit independently of establishing the access authorisation on starting up the vehicle drive unit and emits an access authorisation code from a memory, **characterised in that** the interrogation is also carried out during and/or after termination of operation of the vehicle drive unit in order to make recognisable a loss of the memory during operation of the vehicle drive unit or a loss of the capacity of the memory to transmit the access authorisation code.

2. A method according to claim 1, **characterised in that** when the interrogation is not successful after starting up the vehicle drive unit, a redundant memory (9), which also contains the access authorisation code, is mechanically unlocked.

3. A method according to claim 2, **characterised in that** the vehicle user is referred in a conspicuous manner to the successful unlocking of the redundant memory (9).

4. A method according to claim 3, **characterised in that** the redundant memory (9) is ejected when the vehicle drive unit is switched off.

5. A method according to any one of claims 2 to 4, **characterised in that** the redundant memory (9) is inserted in the AVD (5) and the latter is in turn inserted into an actuating device (1).

6. A method according to claim 5, **characterised in that** the redundant memory (9) and a mechanical key (10) form a structural unit, which is inserted in the actuating unit (1).

## Revendications

1. Procédé de fonctionnement d'un véhicule dans lequel
on détermine une autorisation d'accès dans le dialogue entre un appareil de commande fixé au véhicule et un dispositif de justification d'autorisation (5) porté par l'utilisateur, ci-après appelé « BNE », et on utilise également le BNE pour permettre la mise en service de l'unité d'entraînement du véhicule,
lors de la mise en service de l'unité d'entraînement du véhicule, le BNE est interrogé pour mettre en service l'unité d'entraînement du véhicule indépendamment de la constatation de l'autorisation d'accès et génère un code d'autorisation d'accès à partir d'une mémoire,
**caractérisé en ce que**
l'interrogation est également effectuée pendant et/ou après l'arrêt du fonctionnement de l'unité d'entraînement du véhicule pour pouvoir détecter une perte de la mémoire pendant le fonctionnement de l'unité d'entraînement du véhicule ou une perte de la capacité de la mémoire à transmettre le code de demande d'accès

2. Procédé selon la revendication 1,
**caractérisé en ce que**
si, après la mise en service de l'unité d'entraînement du véhicule l'interrogation est restée sans réponse, une mémoire redondante (9), qui contient également le code d'autorisation d'accès, est déverrouillée mécaniquement.

3. Procédé selon la revendication 2,
**caractérisé en ce que**
l'utilisateur du véhicule est averti de manière évidente du déverrouillage de la mémoire redondante (9) qui a été effectué.

4. Procédé selon la revendication 3,
**caractérisé en ce que**
la mémoire redondante (9) est rejetée lors de arrêt de l'unité d'entraînement du véhicule.

5. Procédé selon l'une quelconque des revendications 2 à 4,
**caractérisé en ce que**
la mémoire redondante (9) est installée dans le BNE (5) et celui-ci est placé à son tour dans un dispositif d'actionnement (1).

6. Procédé selon la revendication 5,
**caractérisé en ce que**
la mémoire redondante (9) et une clé mécanique (10) forment une unité en construction installée dans l'unité d'actionnement (1).
